Europäisches Patentamt

**European Patent Office**

**Office européen des brevets**

(19)

(11) Numéro de publication: **0 006 812**
**B1**

(12)

# FASCICULE DE BREVET EUROPEEN

(45) Date de publication du fascicule de brevet: **23.09.81**

(51) Int. Cl.³: **F 16 L 1/04, B 63 B 35/04, E 02 F 5/10**

(21) Numéro de dépôt: **79400424.2**

(22) Date de dépôt: **26.06.79**

(54) Procédé pour la pose de conduites immergées et dispositif s'y rapportant.

(30) Priorité: **29.06.78 FR 7819467**

(43) Date de publication de la demande:
**09.01.80 Bulletin 80/1**

(45) Mention de la délivrance du brevet:
**23.09.81 Bulletin 81/38**

(84) Etats Contractants Désignés:
**DE GB IT NL SE**

(56) Documents cités:
**DE - A - 2 503 618**
**FR - A - 1 289 421**
**FR - A - 1 320 979**
**FR - A - 1 537 130**
**FR - A - 1 569 957**
**FR - A - 2 275 325**
**US - A - 3 434 297**
**US - A - 3 785 160**
**US - A - 3 975 784**
**US - A - 3 975 919**

(73) Titulaire: **TECHNIQUES INDUSTRIELLES ET MINIERES (Société Anonyme Française)**
**35 Avenue des Champs Elysées**
**F-75008 Paris (FR)**

(73) Titulaire: **Valantin, Alfred**
**14 rue Roger Martin du Gard**
**F-60600 Clermont (FR)**

(72) Inventeur: **Valantin, Alfred**
**14 rue Roger Martin du Gard**
**F-60600 Clermont (FR)**

(74) Mandataire: **Bouju, André**
**38 Avenue de la Grande Armée**
**F-75017 Paris (FR)**

Courier Press, Leamington Spa, England.

## Procédé pour la pose de conduites immergées et dispositif s'y rapportant

La présente invention concerne un procédé pour réaliser et pour installer des conduites immergées, notamment au fond de la mer, ces conduites étant destinées à constituer aussi bien des galeries de tunnel que des tuyauteries pour le transport de liquides ou de gaz.

L'invention concerne également un dispositif plus particulièrement mais non limitativement destiné à mettre en oeuvre ce procédé. Cette invention trouve, en particulier, son application dans le domaine des installations off-shore.

Après les anciens procédés consistant à tirer sur le fond de la mer, à partir du rivage, une conduite entièrement préfabriquée à terre, ou à assembler en surface des tronçons préfabriqués dans un navire-atelier, on a mis au point, suivant l'enseignement du brevet allemand DE—A 2 503 618, un procédé consistant à fabriquer la conduite au fond de la mer, dans un véhicule progressant sur le fond à la vitesse de fabrication de la conduite. La conduite fabriquée sort en continu par l'arrière du véhicule.

Il est particulièrement souhaitable que le personnel occupant le véhicule soit soumis à la pression atmosphérique. Cette situation peut être obtenue en s'inspirant de l'enseignement du brevet français FR—A 1.289.421, qui prévoit une plateforme solidaire du caisson et débouchant à l'air libre. Toutefois, une telle solution n'est applicable qu'à de très faibles profondeurs.

On peut encore, suivant le brevet américain US—A 3.785.160, prévoir des liaisons tubulaires souples avec un navire auxiliaire, mais ce liaisons sont fragiles, nécessitent la présence continuelle du navire à l'aplomb du véhicule et ne permettent pas non plus d'atteindre des profondeurs importantes.

La présente invention vise à réaliser un procédé et un dispositif pour mettre un tel véhicule en relation avec l'atmosphère de façon économique, sans risque sérieux de rupture, avec la possibilité d'atteindre de grandes profondeurs.

Suivant un premier aspect de l'invention, le procédé pour réaliser et installer, notamment à l'aide d'un navire, des conduites immergées reliées à au moins un point de la côte comporte l'élaboration sur place d'au moins une partie de la conduite dans une enceinte se déplaçant dans le sens de la pose, reposant et progressant sur le fond à mesure de l'élaboration de la conduite. L'intérieur de l'enceinte est mis en permanence en communication avec l'atmosphère, et le procédé est caractérisé en ce que l'enceinte est mise en communication avec l'atmosphère par l'intermèdiaire de la conduite déjà posée.

On supprime ainsi toute tuyauterie d'aération entre l'enceinte et le navire auxiliaire éventuel.

Cet avantage est considérable, car la rupture d'une telle tuyauterie doit toujours être envisagée en mer et ses conséquences sont très graves.

Suivant une réalisation préférée de l'invention, on sort progressivement la conduite par l'arrière de l'enceinte relativement au sens de la pose, par l'intermédiaire d'une ouverture étanche de cette enceinte.

La conduite est, en quelque sorte, extrudée de façon quasi-continue à partir de l'enceinte qui progresse, sans nécessité de manoeuvre complexe de pose.

Suivant une première forme de réalisation du procédé, on réalise la conduite dans l'enceinte en matériau aggloméré à liant à prise rapide, dont les matériaux de base sont approvisionnés par la conduite déjà posée.

Il suffit d'approvisionner régulièrement l'ennceinte en matériaux de base de l'aggloméré. L'utilisation de la conduite déjà posée (si elle est de dimensions suffisantes) permet l'approvisionnement par voie sèche à partir de la côte et supprime des moyens de manutention fragiles et complexes entre le navire et l'enceinte.

Suivant une deuxième forme de réalisation du procédé, on élabore la conduite dans l'enceinte en assemblant des plaques constitutives de ladite conduite. Pourvu que ces plaques soient plus petites qu'une demi-virole, on peut les approvisionner à partir de la terre par la conduite déjà posée.

Suivant une troisième forme de réalisation du procédé, on assemble bout à bout à l'intérieur de l'enceinte des tronçons de conduite approvisionnés à partir d'un navire.

Il est, en effet, impossible de faire transiter ces tronçons par la conduite déjà posée, et l'on doit les faire descendre d'un navire auxiliaire d'approvisionnement que accompagne l'enceinte, où on les introduit par l'intermédiaire d'un sas.

Suivant un second aspect de l'invention, le dispositif pour la pose, à l'aide d'un navire auxiliaire, de conduites immergées sur le fond et reliées à au moins un point de la côte, et notamment pour appliquer un procédé tel que décrit plus haut, comprend un véhicule subaquatique muni de moyens pour progresser sur le fond, de moyens de liaison souples avec le navire, de moyens pour élaborer au moins en partie la conduite dans le véhicule, et de moyens pour extraire la conduite du véhicule au fur et à mesure de son élaboration et pour la mettre en place au fond de l'eau.

Ces moyens mettent l'espace intérieur du véhicule en communication avec l'espace intérieur de la totalité de la conduite déjà posée, et le dispositif est caractérisé en ce qu'il comprend des moyens de transport entre le véhicule et l'extrémité de la conduite située à terre, ces moyens de transport étant logés dans la conduite déjà posée.

Cette caractéristique est particulièrement intéressante s'il s'agit d'une conduite de grand diamètre, dans le cas, par exemple, d'un tunnel intercontinental.

Tous les approvisionnements peuvent parvenir au véhicule par voie sèche. Le problème de la ventilation du véhicule est considérablement simplifié. Le personnel lui-même peut être transporté par cette voie.

Suivant une première forme de réalisation de l'invention, le dispositif comprend des moyens pour préparer dans le véhicule un matériau aggloméré à prise rapide et des moyens pour injecter ce matériau entre deux cylindres définissant les parois interne et externe de la conduite.

Cette fabrication quasi-continue s'accompagne d'une extraction également quasi-continue de la conduite par l'arrière du véhicule.

Suivant une deuxième forme de réalisation de l'invention, le dispositif comprend, dans le véhicule, des moyens de manutention pour mettre en place des plaques constitutives de la conduite et pour assembler ces plaques de façon étanche.

Ces plaques sont des fractions de virole qui sont amenées de la terre par la conduite déjà posée. Un tel dispositif permet la réalisation de la conduite en matériaux autres qu'on aggloméré, par exemple en métal.

Suivant une troisième forme de réalisation de l'invention, le dispositif comprend des moyens de manutention pour faire descendre un tronçon de conduite préfabriqué du navire auxiliaire jusqu'au véhicule, et le véhicule comprend un sas pour l'introduction de ce tronçon dans le véhicule.

Un tel dispositif est préférable si la conduite est d'un diamètre relativement faible, car il permet une pose plus rapide malgré les opérations de manutention supplémentaires.

Suivant une quatrième forme de réalisation de l'invention, le dispositif comprend des moyens de manutention et de guidage pour faire descendre un tronçon de conduite préfabriqué du navire auxiliaire jusqu'au véhicule, et un second véhicule placé devant le premier dans le sens de la pose est muni de moyens mécaniques pour pousser le tronçon dans le premier véhicule par une ouverture munie de moyens d'étanchéité.

Dans cette forme de réalisation, le tronçon n'a pas à être introduit entièrement dans le véhicule, et il peut être de grande longueur. Seule la partie voisine du joint sonne lieu à un travail dans le véhicule, qui est traversé axialement de part en part par les tronçons successifs.

Suivant une réalisation préférée de l'invention, les moyens d'etanchéité pour extraire la conduite du véhicule ou pour y introduite un tronçon comprennent deux bagues en matière élastique et résistante comportant chacune une capacité gonflable sélectivement pour assurer la coopération étanche de la bague avec la conduite, l'une au moins de ces bagues étant montée sur un piston annulaire glissant longitudinalement par rapport au véhicule.

Le serrage alternatif des bagues sur la conduite procure une étanchéité continue, et la manoeuvre d'extraction s'effectue par le glissement sur la conduite de la bague non serrée.

Suivant une réalisation préférée de l'invention, les moyens pour extraire la conduite du véhicule comprennent des vérins prenant appui, d'une part, sur un organe fixe du véhicule, et, d'autre part, sur un collier muni de moyens de serrage sur la conduite, des moyens de synchronisation étant prévus pour donner aux vérins une vitesse égale à la vitesse de progression du véhicule sur le fond.

Le véhicule doit s'arrêter pendant la course de retour du vérin, à moins qu'il ne soit prévu un double système de vérins, dans lequel l'un des systèmes effectue sa course active pendant que l'autre effectue sa course de retour.

Suivant une réalisation préférée de l'invention, les moyens de propulsion du véhicule comprennent des trains à chenille orientables. Ces trains à chenille sont avantageusement démontables, et en vue de l'entretien et du dépannage, le véhicule comprenant des sas pour faire rentrer les trains dans le véhicule.

De préférence, le véhicule est monté sur ses moyens de propulsion par l'intermédiaire de vérins de suspension et la course de ces vérins est déterminée pour permettre de remonter les trains à chenille dans les sas de démontage.

Ces vérins sont avantageusement prévus pour permettre le réglage de l'assiette longitudinale du véhicule, de manière à maintenir l'orifice de sortie de la conduite à une distance sensiblement constante du fond. Lors des changements de pente relativement brusques du fond, on évite ainsi d'appliquer des contraintes importantes de flexion sur les conduites et sur le joint glissant.

L'invention prévoit, d'autre part, des vérins horizontaux pour commander l'orientation des trains à chenille, pour provoquer les changements de direction du véhicule.

L'invention prévoit encore, pour le cas de changement particulièrement brusque de pente ou de direction, de monter sur rotule les moyens d'étanchéité entre la conduite et le véhicule.

Suivant une réalisation perfectionnée de l'invention, le dispositif comprend deux sas pour extraire du véhicule deux demi-colliers de chaque côté de la conduite, des moyens pour pousser ces demi-colliers de manière à enserrer la conduite, et des moyens pour ancrer dans le fond des boulons fixant le collier.

Concurrement, s'il s'agit de poser la conduite sur le fond, le dispositif comprend un sas pour extraire une traverse du véhicule et des moyens pour pousser cette traverse sous la conduite.

S'il s'agit au contraire d'enterrer la conduite, le dispositif comprend des moyens pour creuser une tranchée dans le fond immergé et pour y déposer la conduite.

Dans ce dernier cas, le dispositif comprend de préférence des moyens pour reprendre les déblais provenant du creusement de la tranchée et pour les rejeter sur la conduite déposée, de manière à l'enterrer.

Suivant une réalisation particulière de l'invention, pour réaliser et installer une double conduite jumelée, le dispositif comprend un véhicule dédoublé en deux véhicules jumeaux, ces deux véhicules étant réunis par une tuyauterie en U débouchant sur les faces avant des deux véhicules.

Cette disposition permet de résoudre de façon simple le problème de la double circulation, aller et retour, de l'air de ventilation.

D'autres particularités et avantages de l'invention ressortiront encore de la description détaillée qui va suivre.

Aux dessins annexés, donnés à titre d'exemples non limitatifs:

— la Figure 1 est une vue longitudinale partielle avec arraché et coupe partielle d'un dispositif conforme à l'invention,

— la Figure 2 est une vue en coupe suivant II—II de la Figure 1,

— la Figure 3 est une vue en perspective d'un dispositif conforme à l'invention en fonctionnement,

— la Figure 4 est une vue en coupe semi-schématique d'une première forme de réalisation de l'invention,

— la Figure 5 est une vue en coupe semi-schématique d'une deuxième forme de réalisation de l'invention,

— la Figure 6 est une coupe semi-schématique d'une troisième réalisation de l'invention,

— la Figure 7 est une vue en coupe semi-schématique d'une quatrième réalisation de l'invention,

— la Figure 8 est un détail à plus grande échelle de la réalisation de la Figure 7,

— la Figure 9 est un détail d'une première forme de réalisation des moyens d'étanchéité,

— la Figure 10 est un détail d'une seconde forme de réalisation des moyens d'étanchéité,

— la Figure 11 illustre le fonctionnement du dispositif dans le cas d'un changement de direction du véhicule,

— la Figure 12 illustre le fonctionnement du dispositif dans le cas d'un changement de pente du fond,

— la Figure 13 est une vue schématique du dispositif de pose de traverses,

— la Figure 14 est une vue schématique du dispositif de pose de colliers,

— la Figure 15 est une vue schématique du dispositif d'ancrage,

— la Figure 16 est une vue en coupe suivant XVI—XVI de la Figure 15,

— la Figure 17 est un détail à plus grande échelle d'une partie des Figures 15 et 16,

— la Figure 18 est une vue longitudinale avec coupe partielle montrant le dispositif de creusement de tranchée et de remblaiement,

— la Figure 19 est une vue suivant XIX—XIX de la Figure 18,

— la Figure 20 est une vue suivant XX—XX de la Figure 18,

— la Figure 21 est une vue en plan semi-schématique du dispositif pour la pose de deux conduites jumelées.

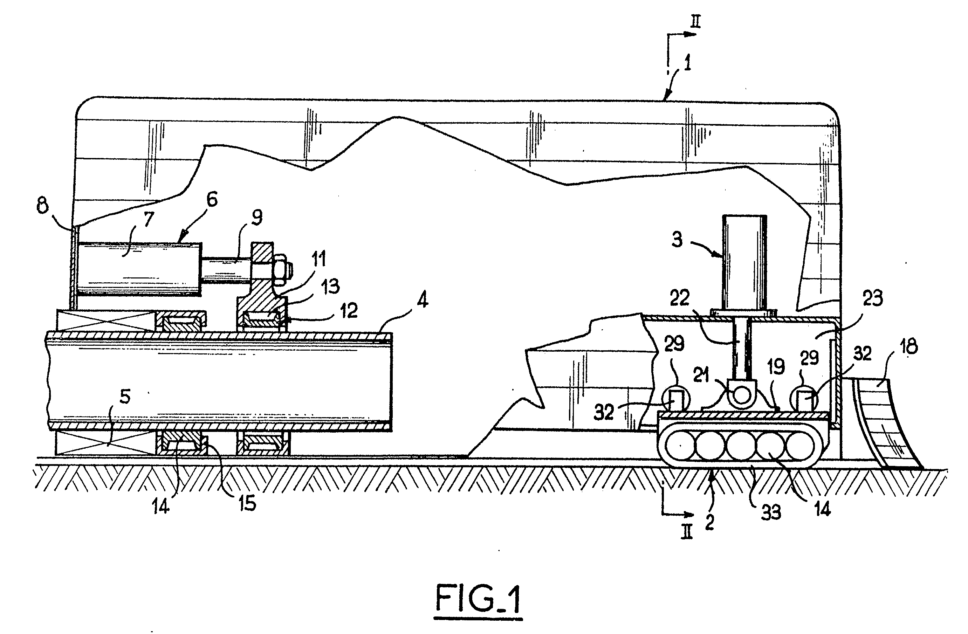

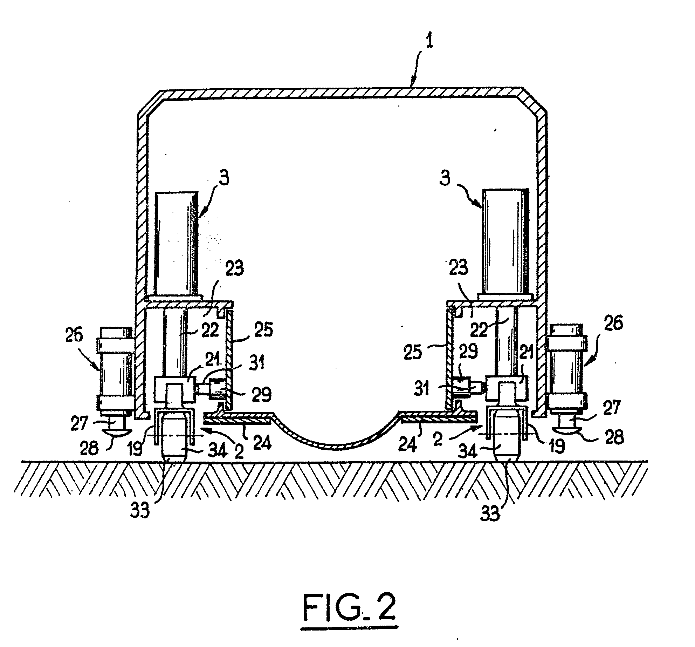

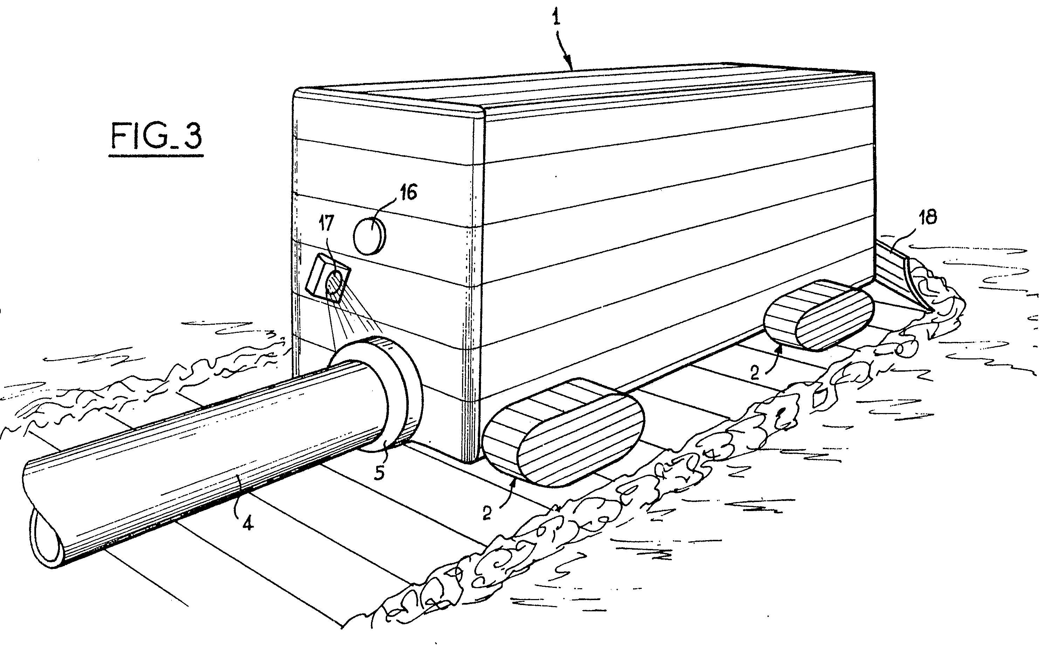

En référence aux Figures 1 à 3, le dispositif conforme à l'invention comprend un véhicule subaquatique 1 formant un compartiment étanche, supporté par quatre trains à chenille 2 par l'intermédiaire de vérins de suspension 3. Ce véhicule est d'une masse telle qu'il repose au fond avec un poids apparent suffisant pour permettre sa progression au moyen des trains à chenille 2.

A l'intérieur du véhicule 1 sont disposés des moyens, qui seront décrits plus loin, pour fabriquer une conduite 4 qui peut sortir par l'arrière du véhicule 1 par l'intermédiaire de moyens d'étanchéité 5 qui seront décrits plus loin en détail.

Un vérin 6 a son corps 7 solidaire de la paroi arrière 8 du véhicule et sa tige 9 est fixée à un collier 11 portant une bague 12 en matière élastique et résistante entourant la conduite 4. Cette bague comporte une capacité 13 susceptible d'être alimentée en fluide sous pression par des canalisations non représentées.

Une seconde bague 14 est constituée de la même manière que la bague 12 mais logée dans un collier 15 fixe par rapport au véhicule.

On comprend que, par l'intermédiaire du fluide sous pression, les bagues 12 et 14 peuvent, à volonté, enserrer la conduite 4 ou coulisser librement sur elle. En serrant la bague 12 et en laissant coulisser la bague 14, la manœuvre de la tige 9 du vérin 6 vers l'arrière du véhicule provoque la sortie de la conduite 4. Le retour de la tige vers l'avant s'obtient en inversant le serrage respectif des bagues 12 et 14. La sortie de la conduite 4 peut être rendue continue en dédoublant le dispositif décrit.

Le véhicule 1 comprend encore un certain nombre de hublots tels que 16 et un certain nombre de phares tels que 17 diversement orientés pour éclairer aussi bien la route à suivre que la conduite 4 en voie de pose. Le véhicule 1 est, d'autre part, muni à l'avant d'un soc 18 pour égaliser au moins grossièrement le fond sur lequel ce véhicule est appelé à rouler.

Chacun des trains à chenille 2 comprend un bâti 19 articulé par l'intermédiaire d'une chape 21 à l'extrémité de la tige 22 de chaque vérin de suspension 3, de manière à lui permettre un mouvement d'oscillation longitudinale pour épouser les inégalités du sol.

chaque train à chenille peut être rentré dans un sas 23 muni de portes 24 et 25, au moyen du vérin 3. Un vérin 26, fixé à l'extérieur du véhicule 1, possède une tige 27 verticale et munie à son extrémité d'une embase 28 pour venir reposer sur le sol en cas de remontée du train 2 dans le sas 23.

Deux vérins 29 sont fixés sur la porte 25 du sas 23 et ont leurs tiges 31 dirigées horizontalement pour coopérer avec des butées 32, solidaires du bâti 19, de manière à provoquer la rotation du train 2 en vue des changements de direction. A cet effet, la tige 22 présente un liberté de rotation dans le vérin 3.

Enfin, le train 2 comprend une chenille 33 engrènant avec des rouleaux 34 dont l'un au moins est entraîné par un moteur hydraulique rotatif (non représenté). Ce moteur est relié à une station centrale pour fluide hydraulique d'un type connu (non représenté) située à l'intérieur du véhicule 1, par l'intermédiaire de canalisations souples passant à l'intérieur de la tige 22 prévue creuse à cet effet.

La station centrale précitée alimente en fluide hydraulique non seulement les quatre trains 2, mais également tous les vérins mentionnés jusqu'ici, ainsi que ceux qui seront mentionnés par la suite.

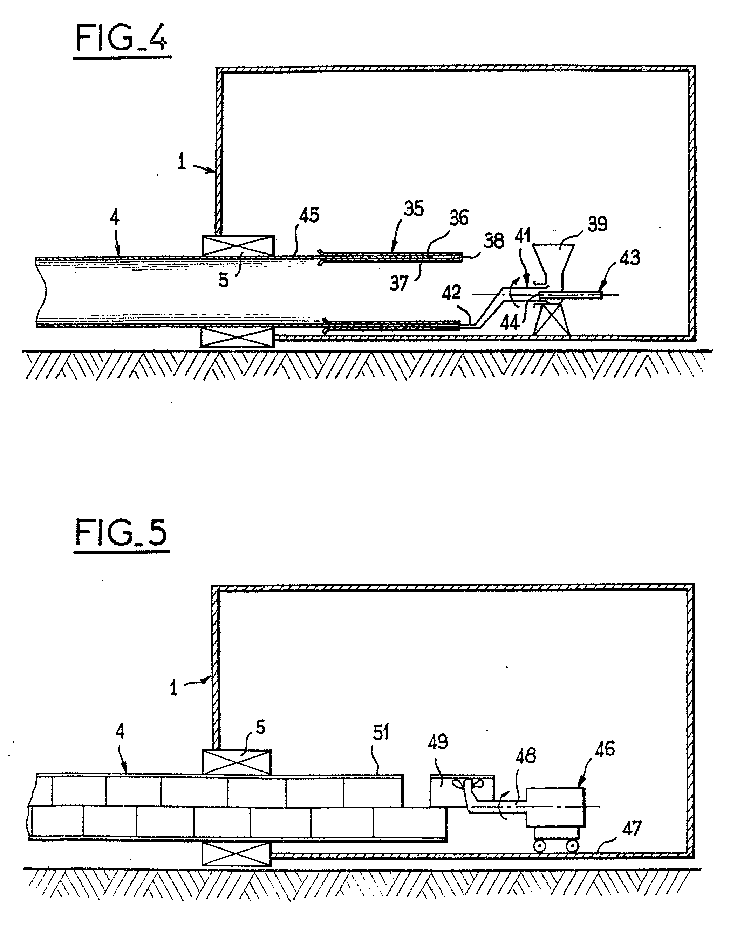

On va maintenant décrire, en référence à la Figure 4, une première forme de réalisation des moyens de fabrication de la conduite 4 à l'intérieur du véhicule 1. Cette figure est schématique, car les moyens en question sont en eux-mêmes connus, et cette Figure est à considérer comme un complément de la Figure 1, dont elle a été détachée pour raison de clarté.

Un coffrage 35 composé de deux cylindres concentriques 36, 37 réunis par des entretoises 38 est fixé dans le véhicule 1 par des supports non représentés. Une trémie 39 comporte, à sa partie inférieure, une tuyauterie 41 montée rotativement sur la trémie et coudée de manière que l'orifice 42 de cette tuyauterie vienne déboucher entre les cylindres 36 et 37. Une tuyauterie 43 terminée par une buse d'injection 44 pénètre dans la base de la trémie 39 pour venir déboucher dans la tuyauterie 41.

En fonctionnement, la trémie 39 est remplie de matériaux secs destinés à constituer un agglomérat par addition d'eau et comportant un liant à prise rapide ou un agglomérat réalisé en utilisant une résine plastique comme liant.

De l'air comprimé est injecté par la tuyauterie 43 et la buse 44 et sert à chasser l'agglomérat par la tuyauterie 41 dans le coffrage 35, où se constitue la conduite 4. L'eau de mouillage de l'agglomérat ou l'accélérateur de prise de la résine est introduit au niveau de l'orifice 42. La conduite ainsi formée sort du véhicule 1 par les moyens d'étanchéité 5, grâce au système de vérins décrit plus haut.

Une certaine distance est prévue entre le coffrage 35 et le point de sortie de la conduite 4, de manière à ménager une portion visible 45 de la conduite terminée, aux fins de contrôle, et éventuellement, d'enrobage.

Dans l'exemple décrit, la prise de l'agglomérat demande environ deux minutes, la vitesse de sortie de la conduite 4 est d'environ un mètre/minute et la longueur du coffrage 35 est d'environ deux mètres.

On va maintenant décrire, en référence à la Figure 5, une deuxième forme de réalisation des moyens de fabrication de la conduite 4. La Figure 5 est réalisée de façon schématique, comme la Figure 4, et pour les mêmes raisons.

Un chariot de manutention 46 est mobile sur un chemin de roulement 47 et comporte un bras de préhension 48 monté pivotant. Ce dispositif permet de prélever, un par un, dans un stock non représenté, des voussoirs, ou éléments de virole 49 et de les présenter à l'extrémité de la conduite 4 en fabrication pour les assembler.

La fixation définitive et étanche des voussoirs s'effectue dans une zone dégagée 51.

Ce dispositif permet, notamment, la réalisation de conduites métalliques par soudage ou boulonnage.

Dans les deux procédés de fabrication qui viennent d'être décrits, l'invention prévoit d'approvisionner les éléments de fabrication, c'est-à-dire les matériaux de l'agglomérat ou les voussoirs, par la conduite 4 déjà posée, à partir de l'extrémité de cette conduite à terre ou sur un îlot artificiel. On emploie, à cet effet, des conteneurs spéciaux ou, si la conduite est suffisamment large, des wagonnets montés sur rails.

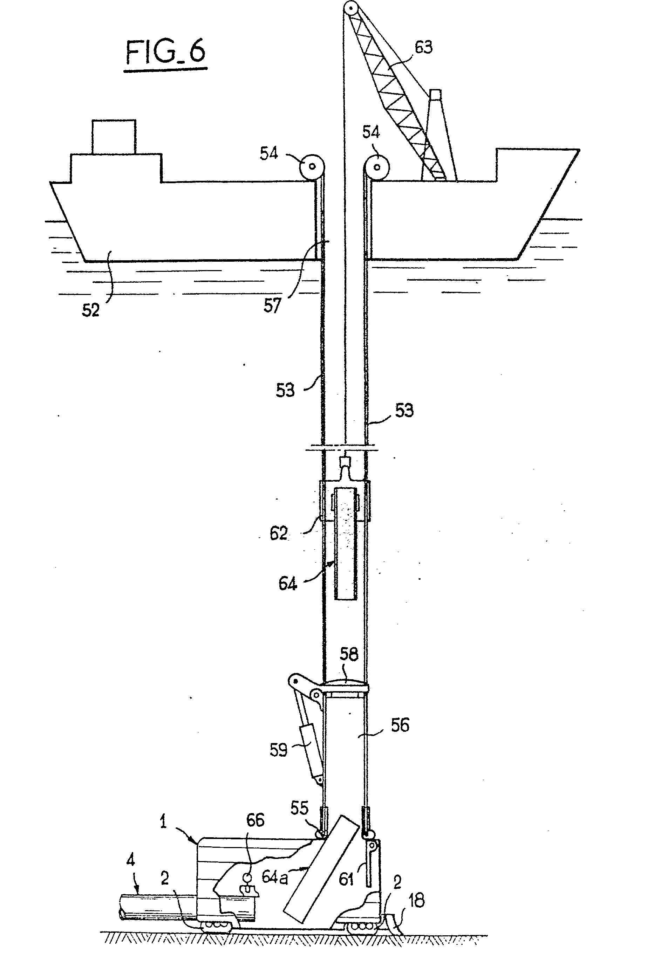

On va maintenant décrire, en référence à la Figure 6, une troisième forme de réalisation des moyens de fabrication de la conduite 4.

Dans cette réalisation, le véhicule 1 est accompagné d'un navire auxiliaire 52 auquel il est rattaché par quatre câbles souples 53 formant cage. La longueur de ces câbles est ajustée automatiquement en fonction des variations de profondeur et d'une légère dérive du navire par des treuils 54 à bord du navire.

Les câbles 53 sont fixés sur un collier 55 enserrant une cheminée 56 du véhicule 1 formant sas et située vis-à-vis d'une cheminée 57 pratiquée de façon connue dans le navire 52. Le sas 56 comprend une porte extérieure 58 manoeuvrable par un vérin 59 et une porte intérieure 61.

Un ascenseur 62, suspendu à une grue 63 à bord du navire, est guidé par les câbles 53 et agencé pour porter un tronçon de conduite 64 préfabriqué.

En fonctionnement, un tronçon 64 stocké à bord du navire est descendu par la grue 63 et l'ascenseur 62 jusqu'au sas 56. Par manoeuvre du sas, le tronçon est introduit dans le véhicule 1 en 64a, où un opérateur 66 l'aboute à la conduite 4 déjà en place.

Cette façon de procéder s'applique, de préférence, aux conduites de diamètre relativement faible qui ne permettraient pas un approvisionnement facile par la conduite posée. Elle permet une fabrication relativement rapide et simple au niveau du véhicule, mais elle s'appliquerait mal à la réalisation de conduites de grand diamètre en raison des grandes dimensions qui seraient alors nécessaires pour les sas 56.

On remarquera que le dispositif s'accommode d'une certaine liberté du navire par rapport au véhicule, en raison des liaisons souples. Il n'est donc pas besoin d'un ancrage précis du navire auxiliaire.

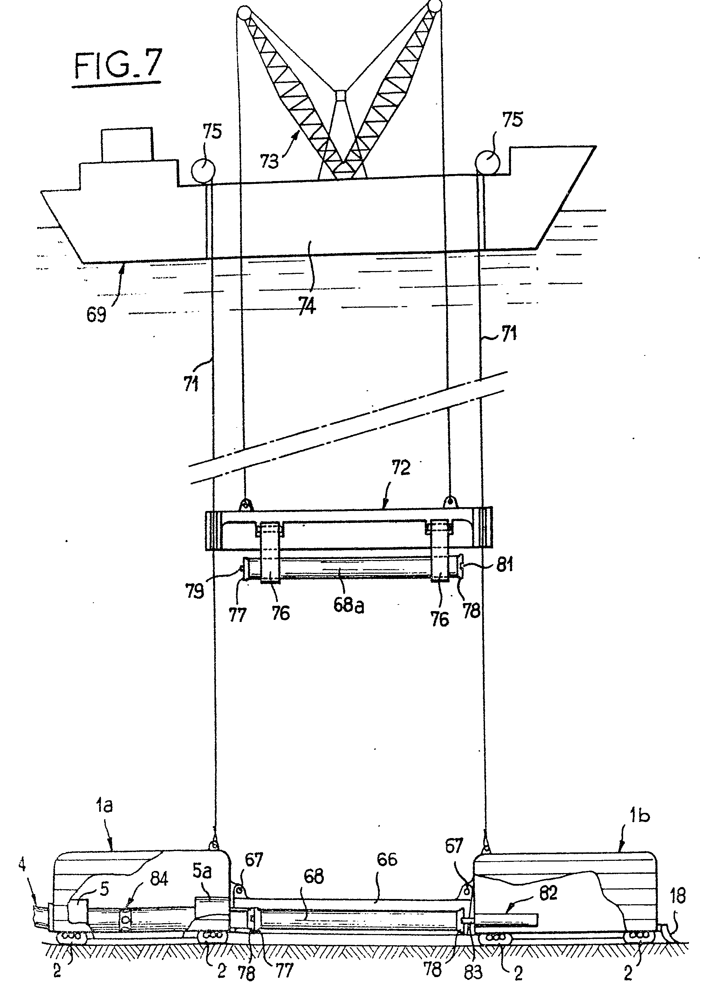

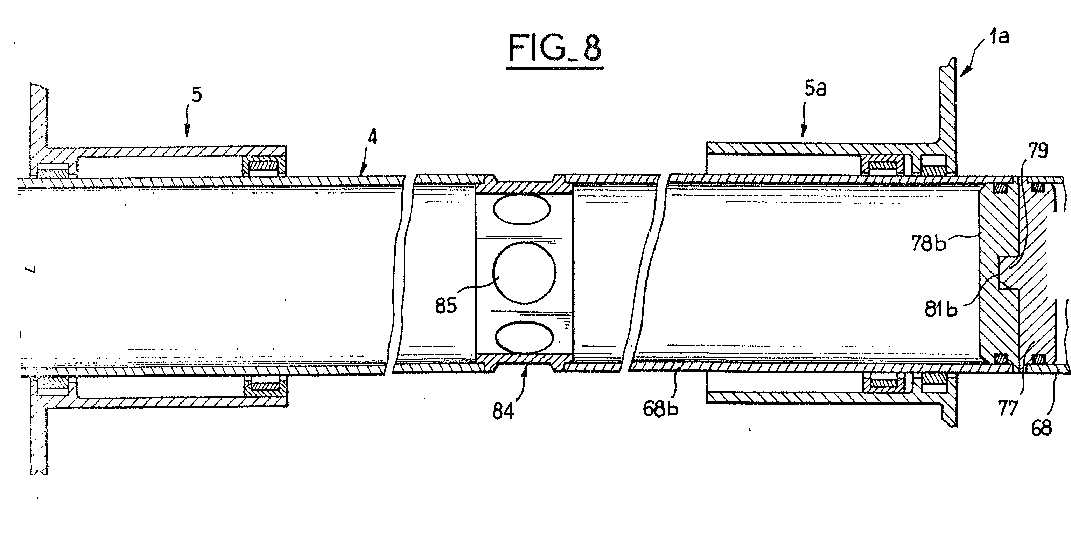

On va maintenant décrire, en référence aux Figures 7 et 8, une quatrième forme de réalisation des moyens de fabrication de la conduite 4.

Dans cette réalisation, le véhicule 1 est dédoublé en un véhicule arrière 1a et un véhicule avant 1b (dans le sens de la pose). Ces véhicules sont analogues au véhicule 1 décrit plus haut, sauf que le véhicule 1b, qui ne contient à aucun moment la conduite 4 ni un tronçon de cette conduite, est démuni des moyens d'étanchéité correspondants et de moyens de fabrication proprement dits. Il ne comporte que ses moyens de propulsion propres et des moyens de manoeuvre que l'on va décrire ci-après.

En revanche, le véhicule 1a comporte des moyens d'étanchéité 5a, à l'avant comme à l'arrière, qui permettent à la conduite 4 de le traverser de part en part.

Les véhicules 1a et 1b sont réunis par un berceau 66 articulè sur des axes 67 et situé à un niveau tel qu'un tronçon de conduite 68 y reposant se situe dans l'alignement de la conduite 4 déjà posée. Le berceau 66 creux assure les communications entre 1a et 1b et, en particulier, l'alimentation en air frais du véhicule 1b.

Chacun des véhicules 1a et 1b est réuni à un navire auxiliaire 69 par deux câbles 71 formant une cage de guidage à quatre câbles pour un ascenseur 72 suspendu à une grue à double flèche 73 située à bord du navire.

Le navire 69 comporte une cheminée 74 permettant le passage de l'ascenseur 72 et les câbles 71 sont reliés à des treuils respectifs 75 pour adapter leur longueur à la profondeur du fond. Ces treuils exercent une tension constante fonction du poids du câble et du bon guidage de l'ascenseur 72.

L'ascenseur 72 est muni de crochets 76 pour supporter un tronçon de conduite préfabriqué 68a qui, dans l'utilisation normale du dispositif, sont de longueur relativement grande, éventuellement plus grande que la longueur des véhicules 1a et 1b. Ce tronçon est minu de bouchons 77, 78, dont l'un, par exemple le bouchon arrière 77 (dans le sens de la pose), présente un picot 79, tandis que l'autre présente un alésage 81 propre à recevoir un picot tel que 79.

Enfin, le véhicule 1b comporte à l'arrière un vérin 82 disposé suivant son axe longitudinal, dont la tige 83 est dimensionnée pour s'insérer librement dans l'alésage 81 du bouchon 78.

Pour utiliser le dispositif, on fait descendre du navire un tronçon préfabriqué 68a muni de ses bouchons 77 et 78 au moyen de l'ascenseur 72, pour le déposer dans le berceau 66 en position 68, c'est-à-dire aligné avec la conduite 4 déjà posée.

On manoeuvre alors le vérin 82 pour pousser le tronçon 68 au contact d'un tronçon 68b précédemment introduit dans le véhicule 1a par la manoeuvre que l'on décrit ici (Figure 8). Dans cette manoeuvre, l'alignement exact des tronçons 68 et 68b est assuré par la coopération du picot 79 avec l'alésage 81b.

On continue la poussée du vérin 82 pour faire entrer la plus grande partie du tronçon 68 dans le véhicule 1a, une longueur équivalente de la conduite 4 sortant du véhicule par les moyens d'étanchéité arrière 5. Une fois le berceau 66 libéré, on recommence l'opération.

Dès que l'ensemble des bouchons 77 et 78b est entré dans le véhicule 1a (Figure 8), on retire ces deux bouchons et on les remplace par un tronçon intermédiaire 84 percé d'orifices 85 permettant la ventilation de véhicule par la conduite 4. C'est seulement au moment où le tronçon 84 va franchir les moyens d'étanchéité arrière 5 qu'on le retire pour effectuer le raccordement définitif des tronçons qu'il séparait.

Là encore, il n'est nul besoin d'un positionnement précis du navire par rapport aux véhicules.

Cette forme de réalisation, plus lourde et plus complexe que la précédente, permet, par l'utilisation de tronçons préfabriqués de grande longueur, d'accélérer la pose.

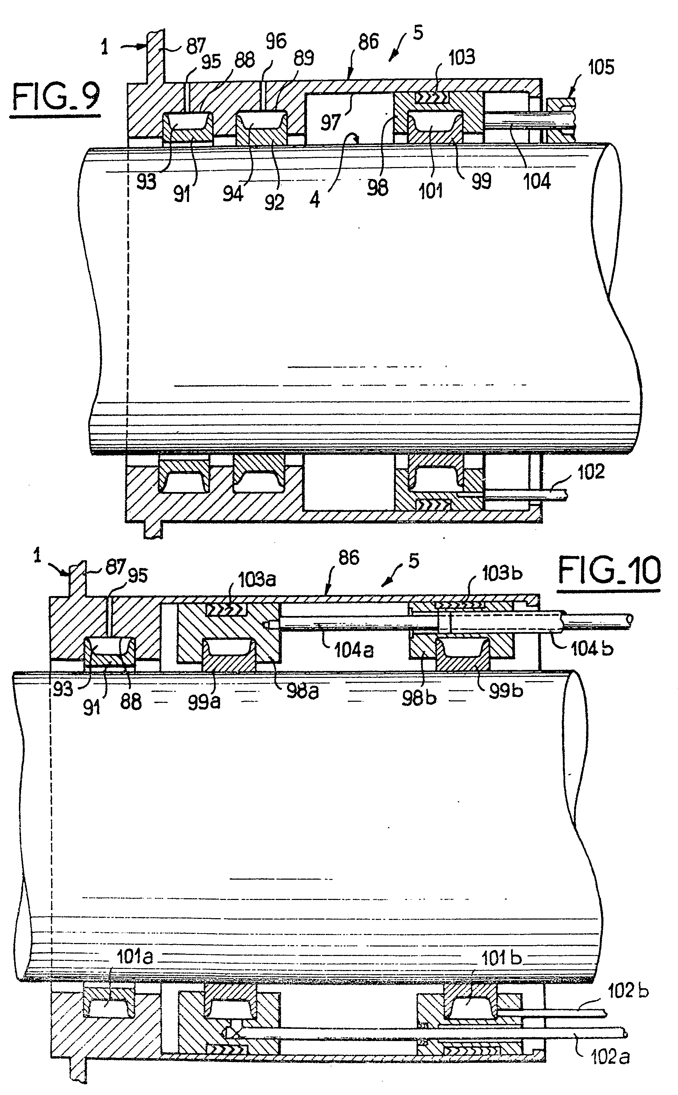

On va maintenant décrire en détail, en référence aux Figures 9 et 10, les moyens d'étanchéité 5 qui ont été mentionnés plus haut.

Dans une première forme de réalisation, représentée sur la Figure 9, un tube 86 est fixé rigidement à la paroi arrière 87 du véhicule 1, ou fait corps avec elle. Dans la paroi interne de ce tube, sont pratiquées deux gorges 88 et 89, dans lesquelles sont insérées deux bagues 91 et 92 en matière élastique et résistante en section en U à leur périphérie, de manière à constituer, avec les gorges respectives, des capacités 93 et 94. Ces capacités sont reliées par des conduites 95 et 96 à la station centrale de fluide hydraulique (non représentée) évoquée précédemment.

Les dimensions des bagues 91 et 92 sont telles que, lorsque les capacités correspondantes ne sont le siège d'aucune pression de fluide hydraulique, leur diamètre intérieur soit légèrement plus grand que celui de la conduite 4 située coaxialement. La conduite peut donc glisser librement dans ces bagues, comme indiqué pour la bague 91. Au contraire, si l'on applique une pression dans la capacité, la bague correspondante vient enserrer la conduite 4 de façon étanche, comme indiqué pour la bague 92.

Vers l'extrémité opposée à la paroi 87 est pratiqué dans le tube, un chambrage 97 dans lequel coulisse, à frottement doux, un piston annulaire 98, dans lequel est insérée une bague 99 analogue aux précédentes, ménageant une capacité 101 en relation avec la source de fluide hydraulique sous pression, par l'intermédiaire d'une canalisation souple 102.

Une garniture étanche 103 d'un type connu est prévue entre le piston 98 et le chambrage 97 pour résister à la pression de l'eau au fond.

Enfin, la tige 104 d'un vérin 105 est fixée au piston 98, de manière à le faire déplacer coaxialement au tube 86.

En fonctionnement, la bague 92 étant bloquée sur la conduite 4 et la bague 99 relâchée, on ramène le piston 98 dans sa position extrême à droite, au moyen du vérin 105. Puis on inverse les blocages des deux bagues précitées. Sous l'action dun vérin 6 (Figure 1), les bagues 12 et 14 étant respectivement bloquée et relâchée, la conduite 4 sort du véhicule, l'étanchéité étant assurée par la bague 99 et la garniture 103.

A fin de course du piston 98 vers la gauche, on inverse le blocage des bagues et l'on reprend le processus.

La bague 91 n'intervient pas dans le fonctionnement et sert seulement à assurer l'étanchéité en cas d'arrêt du dispositif pour révision.

On va maintenant décrire, en référence à la Figure 10, une seconde forme de réalisation des moyens d'étanchéité 5. Ces moyens comprennent encore une bague 91 montée de la même façon que décrit plus haut, et jouant le même rôle.

Mais ici, deux pistons 98a et 98b sont montés coulissants dans un chambrage et ils sont reliés respectivement à des tiges 104a et 104b montées concentriques d'un double vérin non représenté, susceptible de faire mouvoir les deux pistons simultanément en sens contraire.

Les capacités 101a et 101b fournies par les bagues 99a et 99b sont mises en relation alternativement avec la source de fluide hydraulique sous pression, par des canalisations 102a et 102b.

On comprend que le blocage alternatif des bagues 99a et 99b, combiné au mouvement simultané en sens contraire des pistons 98a et 98b permet la sortie en continu de la conduite 4, puisqu'il y a toujours un piston accompagnant la conduite, tandis que l'autre reprend sa position initiale.

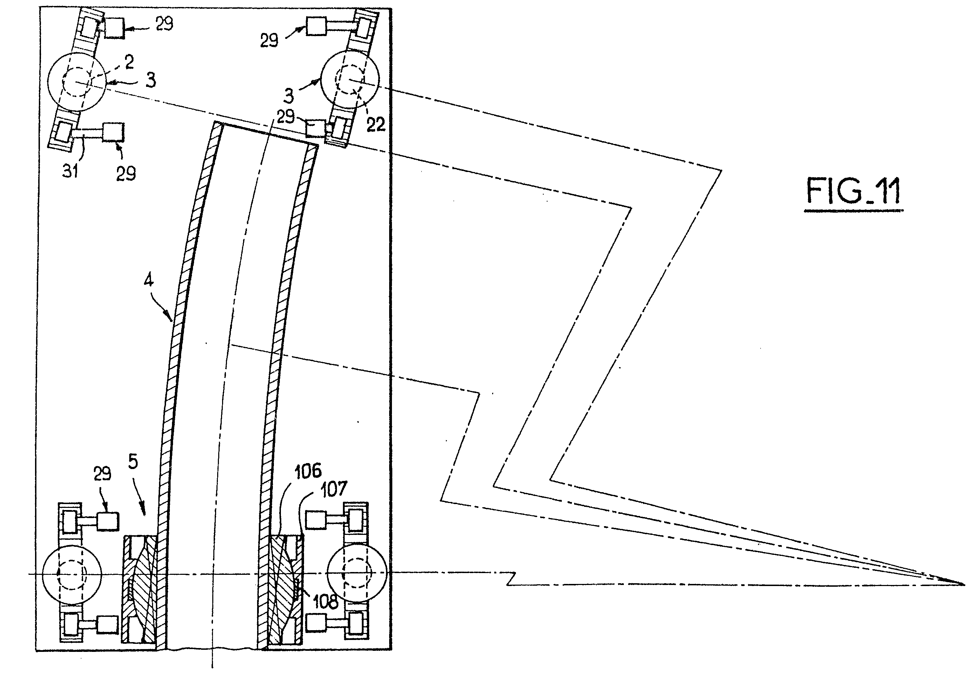

On va maintenant décrire, en référence à la Figure 11, une application particulière du procédé et du dispositif dans le cas où la conduite 4 doit décrire une courbe sur un fond sensiblement horizontal.

Pour assurer la trajectoire courbe du véhicule 1, on agit différentiellement sur les vérins de direction 29 pour modifier l'orientation des trains à chenille 2, au moins des trains avant, qui tournent autour des axes définis par les tiges 22 des vérins de suspension 3.

Pour que la conduite prenne la courbure souhaitée, on peut utiliser des tronçons préfabriqués courbes, ou introduire des cales biaises entre tronçons, ou faire varier l'orientation du coffrage de fabrication.

Si le rayon de courbure est grand, les moyens d'étanchéité 5, tels que décrits plus haut, peuvent convenir, l'élasticité des bagues offrant un degré de liberté suffisant. Sinon, l'invention prévoit de monter l'ensemble décrit en référence aux Figures 9 et 10 sur une rotule 106 prise dans une cage 107 solidaire du véhicule 1, par l'intermédiaire d'un joint de rotule 108.

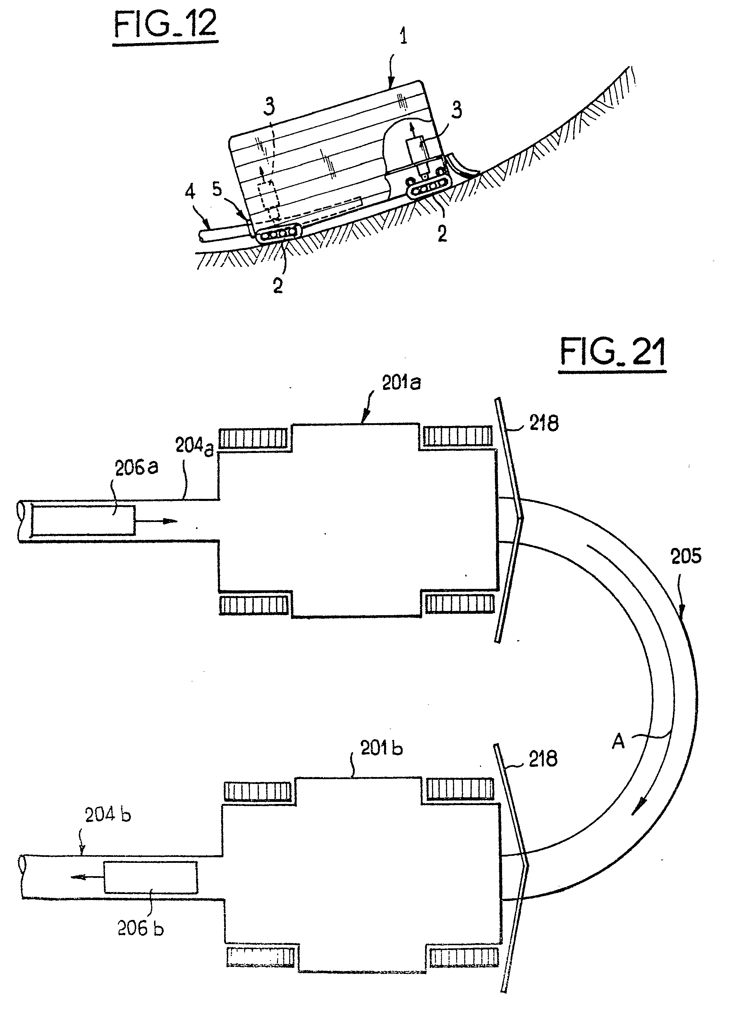

Dans le cas d'un changement de pente (Figure 12), on utilise les vérins de suspension 3 pour modifier l'assiette longitudinale du véhicule 1, de manière que les moyens d'étanchéité 5 restent à une distance sensiblement constante du fond, ce qui permet d'éviter la fatigue de la conduite 4 si le changement de pente est relativement lent. Dans le cas contraire, il est préférable de monter ces moyens d'étanchéité sur rotule, comme indiqué plus haut.

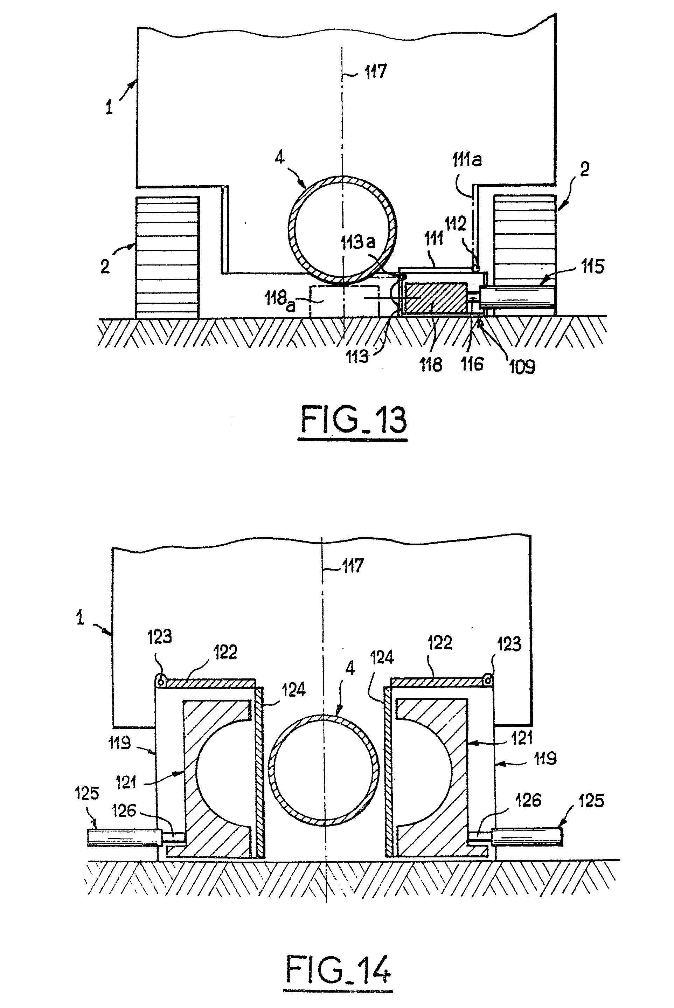

On va maintenant décrire, en référence à la Figure 13, un dispositif particulier pour placer des traverses sous la conduite 4 supposée de poids apparent positif. A l'arrière du véhicule 1, et à sa partie inférieure, très voisine du fond, est disposé un sas 109 muni d'une porte 111 articulée en 112, s'ouvrant vers l'intérieur du véhicule, et d'une porte 113 articulée en 114, s'ouvrant vers l'eau. Un vérin 115 est fixé sur une paroi du sas dans lequel pénètre sa tige 116 dont la course est orientée vers le plan médian longitudinal 117 du véhicule 1.

Pour poser une traverse 118, on introduit cette traverse dans le sas 109 en ouvrant la porte 111 en 111a, puis, après avoir refermé cette porte et ouvert la porte 113 en 113a, on actionne le vérin 115 pour pousser la traverse 118 sous la conduite 4 en 118a.

Dans le cas où la conduite 4 est de poids apparent négatif et tendrait à quitter le fond, le véhicule 1 est muni de moyens pour fixer sur cette conduite un collier destiné à être ancré sur le fond.

Ces moyens comprennent (Figure 14) deux sas 119 situés à l'arrière du véhicule, au niveau de la conduite 4 et pouvant contenir deux demi-colliers 121. Chacun de ces sas comporte une porte 122 articulée en 123 ouvrant sur l'intérieur du véhicule et une porte coulissante 124 ouvrant sur l'eau.

Sur chacun des sas est fixé un vérin 125 dont la tige 126 a sa course dirigée vers le plan médian 117 du véhicule.

Les demi-colliers 121 se posent sensiblement de la même façon que les traverses 118. Après avoir introduit les demi-collier dans les sas et ouvert les portes 124, on les pousse autour de la conduite 4, au moyen des vérins 125.

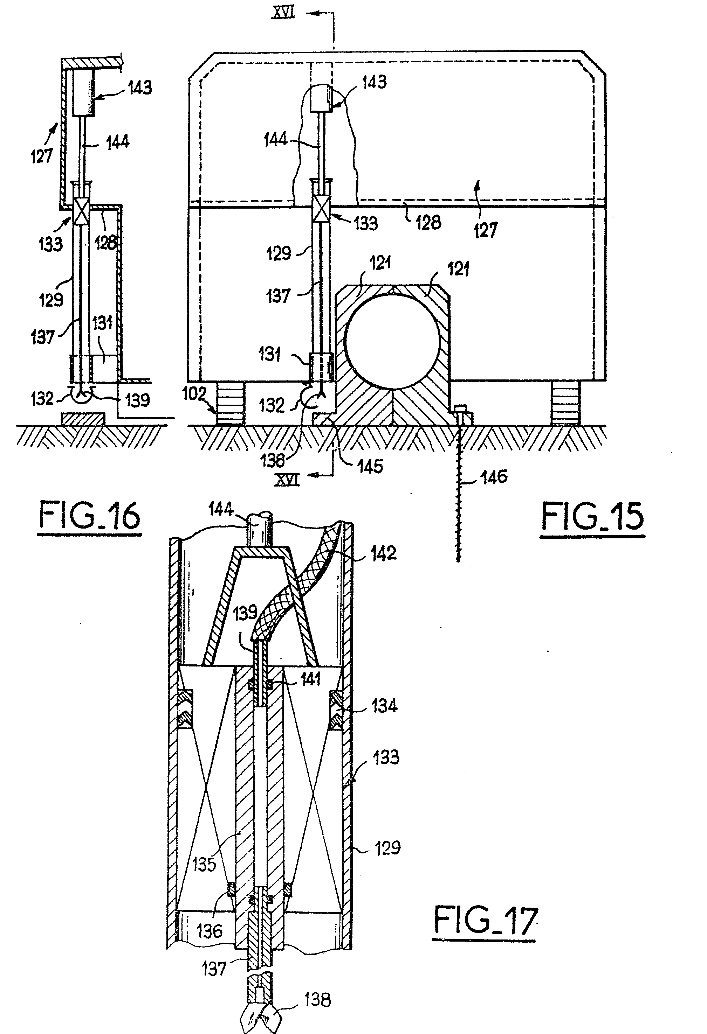

On procède ensuite à l'ancrage des colliers sur le fond par des moyens qui vont être décrits ci-après, en référence aux Figures 15 à 17.

A l'arrière du véhicule 1, la carrosserie de ce dernier présente une saillie 127 (Figures 15 et 16), comportant une face plane rentrante 128 traversée par un tube vertical 129 maintenu à son extrémité inférieure par un collier 131. Un clapet 132 télécommandé par des moyens de commande non représentés permet de fermer le tube 129.

Dans le tube 129 est monté coulissant un bloc moteur 133 (Figure 17) à commande électrique muni de joints d'étanchéité 134 suffisants pour empêcher l'eau de pénétrer quand le clapet 132 est ouvert.

Le bloc moteur 133 est d'un type connu et permet la mise en rotation d'un mandrin axial 135 qui coopère avec le bloc par un joint tournant étanche 136. Dans le mandrin 135 est insérée une barre de foration creuse 137 qui porte un outil 138.

A l'autre extrémité du mandrin 135 est fixé un ajutage 139 par l'intermédiaire d'un joint tournant 141, ledit ajutage étant raccordé à une canalisation souple 142 d'évacuation des déblais.

Un vérin télescopique 143, fixé au plafond du véhicule 1, a sa tige 144 raccordée au bloc moteur 133 pour le faire monter ou descendre dans le tube 129.

Pour utiliser le dispositif, on ouvre le clapet 132 et, grâce au vérin 143, on fair descendre le bloc moteur 133 en même temps qu'on le met en rotation. L'outil 138 porté par la barre 137 vient forer un trou d'abord dans un rebord 145 du demi-collier 121, puis dans le fond, les déblais étant refoulés par la pression de l'eau par l'intermediaire de la barre creuse 137 et de la canalisation 142.

Après foration, on remonte le bloc moteur 133 jusqu'à pouvoir fermer le clapet 132, puis on sort complètement le bloc du tube 129 et l'on remplace la barre de foration 137 par un boulon d'ancrage et l'on recommence l'opération pour fixer le boulon en 146 par des moyens connus.

Bien entendu, le dispositif décrit est dédoublé de chaque côté de la conduite, de manière à pouvoir effectuer l'ancrage de chaque côté.

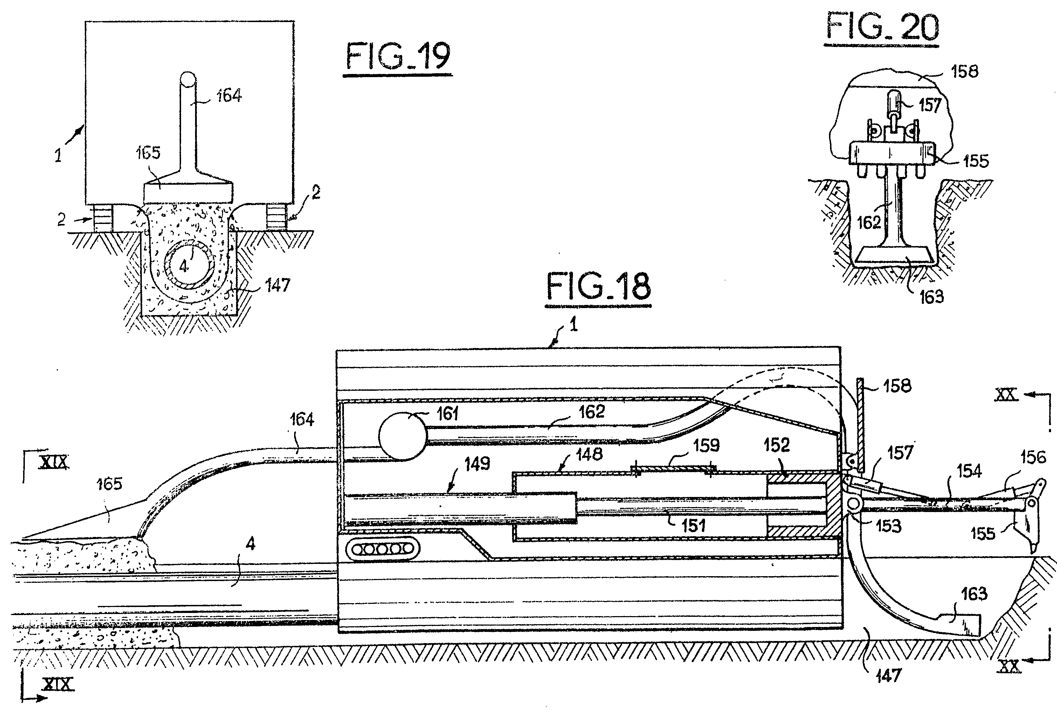

On va maintenance décrire, en référence aux Figures 18 à 20, une réalisation particulière de l'invention destinée à la pose de conduites enterrées.

Dans cette réalisation, les moyens de fabrication et d'extraction de la conduite du véhicule sont surbaissés par rapport au véhicule (Figure 19), de manière que la conduite 4 soit extraite au niveau d'une tranchée 147.

Un tube 148 est fixé en bout à l'avant du véhicule 1, et se referme de façon étanche sur le corps d'un vérin coaxial 149 fixé à la paroi arrière du véhicule.

La tige 151 du vérin 149 porte à son extrémité une glissière 152 coulissant avec un certain jeu dans le cylindre 148. La glissière 152 comporte une chape 153 où est articulé un bras 154 portant une pelle articulée 155. La pelle 155 peut être télécommandée par un vérin 156, alors que le bras 154 peut être télécommandé par un vérin 157.

A l'intérieur du périmètre du tube 148, la paroi avant du véhicule présente une ouverture obturable par une porte articulée 158, tandis que, dans le véhicule, le tube 148 comporte une trappe de visite étanche 159. On comprend que le tube 148 forme sas.

Une pompe suceuse 161 est reliée par une conduite 162 à une goulotte collectrice 163 se situant au fond de la tranchée 147 creusée par la pelle 155, et, par une conduite 164, à une trémie de répartition 165, débouchant à l'arrière du véhicule au-dessus de la tranchée.

En fonctionnement, la pelle 155 creuse la tranchée à l'avant du véhicule, grâce à la manoeuvre des vérins 156 et 157, et les déblais sont repris par la goulotte 163 et la pompe 161 pour être rejetés par la trémie 165 sur la conduite 4 qui se trouve ainsi enterrée.

Pour la surveillance et l'entretien du dispositif de pelletage, on rentre l'ensemble dans le tube 148 en utilisant le vérin 149, puis on ferme la porte 158. Après avoir vidé le tube 148, on ouvre la trappe de visite 159.

On va maintenant décrire, en référence à la Figure 21, une réalisation particulière du dispositif pour la pose de deux conduites jumelées 204a et 204b.

Le dispositif comprend deux véhicules 201a et 201b, sensiblement identiques, et portant chacun un soc 218. Les véhicules sont astreints à se déplacer à la même vitesse par des liaisons d'asservissement non représentées, et posent chacun une conduite, indépendamment l'un de l'autre.

Une conduite semi-circulaire 205 relie constamment les véhicules entre eux par l'avant.

Avec ce dispositif, des conteneurs 206a provenant de l'entrée de la conduite 204a à terre peuvent être acheminés à sens unique jusqu'au véhicule 201a et être ramenés à terre en 206b par la conduite 204b, après avoir transité par la conduite 205.

De même, la ventilation des véhicules est considérablement simplifiée par la possibilité d'un sens unique. L'air frais arrive par la conduite 204a et l'air vicié est évacué suivant la flèche A par la conduite 204b.

Dans toutes les réalisations décrites, l'invention permet de maintenir l'intérieur des véhicules sous la pression atmosphérique, ce qui supprime les problèmes de décompression et permet une rotation rapide du personnel. Dans la plupart des réalisations, notamment celles relatives aux grosses conduites, tous les transports, d'hommes et de matériel, peuvent s'effectuer par voie sèche, sans recourir à l'utilisation d'un sas. Enfin, le recours à un navire auxiliaire ne s'impose que dans certaines variantes, où il apparaît comme simplifié par rapport aux techniques connues, et où il apporte, en compensation, une accélération notable de la pose.

L'invention s'applique aussi bien à la réalisation de vastes galeries pour tunnels intercontinentaux qu'à la pose de tuyauteries pour transports de liquides et à toutes conduites de dimensions intermédiaires.

Bien entendu, l'invention ne se limite pas aux exemples décrits, mais couvre également toute variante constructive.

**Revendications**

1. Procédé pour réaliser et installer, avec ou sans aide d'un navire, des conduites immergées reliées à au moins un point de la côte, comportant l'élaboration sur place, au fond de l'eau, d'au moins une partie de la conduite (4) dans une enceinte (1) formant véhicule subaquatique se déplaçant dans le sens de la pose, reposant et progressant sur le fond à mesure de l'élaboration de la conduite, et l'intérieur de l'enceinte (1) étant en permanence en communication avec l'atmosphère, caractérisé en ce que l'enceinte (1) est mise en communication avec l'atmosphère par l'intermédiaire de la conduite (4) déjà posée.

2. Procédé conforme à la revendication 1, caractérisé en ce qu'on sort progressivement la conduite (4) par l'arrière de l'enceinte (1) relativement au sens de la pose, par l'intermédiaire d'une ouverture étanche (5) de cette enceinte.

3. Procédé conforme à la revendication 2, caractérisé en ce qu'on réalise la conduite (4) dans l'enceinte (1) en matériau aggloméré à liant à prise rapide.

4. Procédé conforme à la revendication 2, caractérisé en ce qu'on réalise la conduite (4) dans l'enceinte (1) en assemblant des plaques constitutives (49) de ladite conduite approvisionnées à partir de la terre par la conduite (4) déjà posée.

5. Procédé conforme à la revendication 2, caractérisé en ce qu'on assemble bout à bout, à l'intérieur de l'enceinte (1), des tronçons (64) de conduite approvisionnés à partir d'un navire (52).

6. Dispositif pour la pose, avec ou sans aide d'un navire, de conduites immergées sur le fond et reliées à au moins un point de la côte, pour l'application du procédé conforme à la revendication 1, comprenant un véhicule subaquatique (1) muni de moyens (2) pour progresser sur le fond, de moyens de liaison souples avec le navire eventuel, de moyens (35, 42; 46) pour élaborer au moins en partie la conduite (4) dans le véhicule et de moyens pour extraire la conduite du véhicule au fur et à mesure de son élaboration et pour la mettre en place au fond de l'eau, ces moyens mettant l'espace intérieur du véhicule en communication avec l'espace intérieur de la totalité de la conduite déjà posée, caractérisé en ce qu'il comprend des moyens de transport entre le véhicule (1) et l'extrémité de la conduite (4) suitée à terre, ces moyens de transport étant logés dans la conduite déjà posée.

7. Dispositif conforme à la revendication 6, caractérisé en ce qu'il comprend des moyens (39) pour préparer, dans le véhicule, un matériau aggloméré à prise rapide et des moyens (42, 44) pour injecter ce matériau entre deux cylindres (35) définissant les parois interne et externe la conduite (4).

8. Dispositif conforme à la revendication 6, caractérisé en ce qu'il comprend, dans le véhicule, des moyens de manutention (46) pour mettre en place des plaques (49) constitutives de la conduite (4) et pour assembler ces plaques de façon étanche.

9. Dispositif pour la mise en oeuvre du procédé conforme à la revendication 5, caractérisé en ce qu'il comprend des moyens de manutention (53, 62) pour faire descendre un tronçon (64) de conduite préfabriqué du navire (52) jusqu'au véhicule (4), et en ce que le véhicule comprend un sas (56) pour l'introduction de ce tronçon dans le véhicule.

10. Dispositif pour la mise en oeuvre du procédé conforme à la revendication 5, caractérisé en ce qu'il comprend des moyens de manutention (72) et de guidage (71) pour faire descendre un tronçon (68$a$) de conduite préfabriqué du navire (69) jusqu'au véhicule (1$a$), et un second véhicule (1$b$) placé devant le premier (1$a$) dans le sens de la pose, et muni de moyens mécaniques (82) pour pousser le tronçon dans le premier véhicule par une ouverture munie de moyens d'étanchéité (5$a$).

11. Dispositif conforme à l'une des revendications 6 à 10, caractérisé en ce que les moyens pour extraire la conduite (4) du véhicule, ou pour y introduire un tronçon, comprennant à l'intérieur de l'ouverture étanche (5) deux bagues (12, 14; 92, 99) en matière élastique et résistante comportant chacune une capacité (13; 94, 101) gonflable sélectivement pour assurer la coopération étanche de la bague avec la conduite (4), l'une au moins (12; 99) de ces bagues étant montée sur un piston annulaire (11; 98) glissant longitudinalement par rapport au véhicule (1).

12. Dispositif conforme à l'une des revendications 6 à 11, caractérisé en ce que les moyens (5) d'étanchéite pour extraire la conduite (4) du véhicule (1) comprennent des vérins (6, 105) prenant appui, d'une part, sur un organe fixe du véhicule et, d'autre part, sur un collier (11, 98) muni de moyens de serrage (12, 99) sur la conduite (4), des moyens de synchronisation étant prévus pour donner aux vérins une vitesse égale à la vitesse de progression du véhicule sur le fond.

13. Dispositif conforme à l'une des revendications 6 à 12, caractérisé en ce que les moyens de propulsion du véhicule comprennent des trains à chenille (2) orientables.

14. Dispositif conforme à la revendication 13, caractérisé en ce que les trains à chenille (2) sont démontables et en ce que le véhicule comprend des sas (23) pour faire rentrer les trains (2) dans le véhicule (1).

15. Dispositif conforme à l'une des revendications 6 à 14, caractérisé en ce que le véhicule (1) est monté sur ses moyens de propulsion par l'intermédiaire de vérins de suspension (3).

16. Dispositif conforme à la revendication 15, caractérisé en ce que la course des vérins de suspension (3) est déterminée pour permettre de remonter les trains à chenille (2) dans les sas de démontage (23).

17. Dispositif conforme à l'une des revendications 15 ou 16, caractérisé en ce qu'il comprend des moyens (3) pour régler l'assiette longitudinale du véhicule (1) de manière à maintenir l'ouverture étanche (5) de sortie de la conduite (4) à une distance sensiblement constante du fond.

18. Dispositif conforme à l'une des revendications 13 à 17, caractérisé en ce qu'il comprend des vérins horizontaux (29) pour commander l'orientation des trains à chenille (2).

19. Dispositif conforme à l'une des revendications 6 à 18, caractérisé en ce que les moyens d'étanchéité de l'ouverture étanche (5) entre la conduite (4) et le véhicule (1) sont montés sur rotule.

20. Dispositif conforme à l'une des revendications 6 à 18, caractérisé en ce qu'il comprend deux sas (119) pour extraire du véhicule (1) deux demi-colliers (121) de chaque côté de la conduite (4), des moyens (125) pour pousser ces demi-colliers, de manière à enserrer la conduite, et des moyens (133, 135, 138) pour ancrer dans le fond des boulons (146) fixant le collier (121).

21. Dispositif conforme à la revendication 20, caractérisé en ce que les moyens pour effectuer l'ancrage comprennent des barres de foration (138) munies de moyens moteurs (133), l'ensemble étant logé dans des tubes obturables (129) pouvant communiquer avec l'intérieur du véhicule (1).

22. Dispositif conforme à l'une des revendications 6 à 20, caractérisé en ce qu'il comprend un sas (109) pour extraire une traverse (118) du véhicule (1) et des moyens (115) pour pousser cette traverse sous la conduite (4).

23. Dispositif conforme à l'une des revendications 6 à 19, caractérisé en ce qu'il comprend des moyens (149, 155) pour creuser une tranchée (147) dans le fond immergé et pour y déposer la conduite (4).

24. Dispositif conforme à la revendication 23, caractérisé en ce qu'il comprend des moyens (163, 161, 165) pour reprendre les déblais provenant du creusement de la tranchée (147) et pour les rejeter sur la conduite (4) déposée.

25. Dispositif conforme à l'une des revendications 6 à 24, pour réaliser et installer une double conduite jumelée (204a, 204b), caractérisé en ce qu'il comprend un véhicule subaquatique dédoublé en deux véhicules jumeaux (201a, 201b), ces deux véhicules étant réunis par une tuyauterie en U (205) débouchant sur les faces avant de deux véhicules.

**Claims**

1. Method for constructing and installing with or without the aid of a ship, submerged pipelines connected to at least one point of the coast, comprising the fabrication in situ on the sea floor, of at least one portion of the pipeline (4) within a caisson (1) forming an underwater vehicle which travels in the direction of laying, which rests and progresses along the sea floor as the pipeline is being assembled, and the interior of the caisson (1) being continuously in communication with the atmosphere, characterized in that the caisson (1) is put into communication with the atmosphere by means of the pipeline (4) which has already been laid.

2. Method in accordance with claim 1, characterized in that the pipeline (4) is progressively delivered from the rear end of the caisson (1) relatively to the direction of laying through a leak-tight opening (5) of this caisson.

3. Method in accordance with claim 2, characterized in that the pipeline (4) is fabricated within the caisson (1) from agglomerate material containing a quick-setting binder.

4. Method in accordance with claim 2, characterized in that the pipeline (4) is fabricated within the caisson (1) by assembling constituent plates (49) of the said pipeline which are supplied from land through the pipeline (4) which has already been laid.

5. Method in accordance with claim 2, characterized in that sections (64) of pipeline supplied from a ship (52) are assembled in end-to-end relation within the interior of the caisson (1).

6. Device for the installation, with or without the aid of a ship, of pipelines submerged on the sea floor and connected to at least one point of the coast, for the application of the method in accordance with claim 1, comprising an underwater vehicle (1) provided with means (2) for travelling along the sea floor, means for providing a flexible connection with the ship if necessary, means (35, 42, 46) for fabricating the pipe (4) within the vehicle at least to a partial extent and means for withdrawing the pipe from the vehicle progressively as it is being fabricated and for placing it on the sea floor,

these means being such as to put the internal space of the vehicle into communication with the internal space of the entire pipeline which has already been laid, characterized in that it comprises means for transportation between the vehicle (1) and that end of the pipeline (4) which is located on land, these transportation means being housed within the pipeline which has already been laid.

7. Device in accordance with claim 6, characterized in that it comprises means (39) for preparing a quick-setting agglomerate material within the vehicle and means (42, 44) for injecting this material between two cylinders (35) which define the internal and external walls of the pipeline (4).

8. Device in accordance with claim 6, characterized in that it comprises within the vehicle handling means (46) for positioning constituent plates (49) of the pipeline (4) and for assembling these plates in leak-tight manner.

9. Device for the practical application of the method in accordance with claim 5, characterized in that it comprises handling means (53, 62) for lowering a section (64) of prefabricated pipe from the ship (52) to the vehicle (4) and that the vehicle comprises a lock-chamber (56) for the introduction of this pipe section into the vehicle.

10. Device for the practical application of the method in accordance with claim 5, characterized in that it comprises means for handling (72) and guiding (71) in order to lower a prefabricated pipe section (68a) from the ship (69) to the vehicle (1a), and a second vehicle (1b) placed in front of the first (1a) in the direction of laying, and fitted with mechanical means (82) for thrusting the pipe section into the first vehicle through an opening fitted with sealing means (5a).

11. Device in accordance with any one of claims 6 to 10, characterized in that the means for withdrawing the pipeline (4) from the vehicle or for introducing a pipe section comprise, within the interior of the leak-tight opening (5), two rings (12, 14; 92, 99) of elastic and high-strength material each provided with a selectively inflatable cavity (13; 94, 101) in order to ensure leak-tight cooperation of the ring with the pipeline (4), at least one (12; 99) of these rings being mounted on an annular piston (11; 98) which slides longitudinally with respect to the vehicle (1).

12. Device in accordance with any one of claims 6 to 11, characterized in that the sealing means (5) for withdrawing the pipeline (4) from the vehicle (1) comprise jacks (6, 105) applied on the one hand against a fixed element of the vehicle and on the other hand against a collar (11, 98) fitted with means (12, 99) for clamping against the pipe (4), synchronization means being provided for displacing the jacks at a speed equal to the speed of forward travel of the vehicle along the sea floor.

13. Device in accordance with any one of claims 6 to 12, characterized in that the vehicle propulsion means comprise orientable caterpillar-track units (2).

14. Device in accordance with claim 13, characterized in that the caterpillar-track units (2) can be disassembled and that the vehicle is provided with lock-chambers (23) for withdrawing the caterpillar-track units (2) into the vehicle (1).

15. Device in accordance with any one of claims 6 to 14, characterized in that the vehicle (1) is mounted on its propulsion means through the intermediary of suspension jacks (3).

16. Device in accordance with claim 15, characterized in that the range of travel of the suspension jacks (3) is so determined as to permit upward withdrawal of the caterpillar-track units (2) into the disassembly lock-chambers (23).

17. Device in accordance with one of claims 15 or 16, characterized in that it comprises means (3) for adjusting the longitudinally inclination of the vehicle (1) in order to maintain the leak-tight opening (5) of the pipeline (4) at a substantially constant distance from the sea floor.

18. Device in accordance with any one of claims 13 to 17, characterized in that it comprises horizontal jacks (29) for controlling the orientation of the caterpillar-track units (2).

19. Device in accordance with any one of claims 6 to 18, characterized in that the means for sealing the leak-tight opening (5) between the pipeline (4) and the vehicle (1) are mounted on a knuckle-joint bearing.

20. Device in accordance with any one of claims 6 to 18, characterized in that it comprises two lock-chambers (119) for withdrawing from the vehicle (1) two half-collars (121) on each side of the pipeline (4), means (125) for exerting a thrust on these half-collars in such a manner as to clamp the pipe, and means (133, 135, 138) for anchoring in the sea bed bolts (146) for fixing the collar (121).

21. Device in accordance with claim 20, characterized in that the means for carrying out the anchoring operation comprise drilling rods (138) provided with driving means (133), the complete assembly being housed within pluggable tubes (129) which are capable of communicating with the interior of the vehicle (1).

22. Device in accordance with any one of claims 6 to 20, characterized in that it comprises a lock-chamber (109) for withdrawing a bolster (118) from the vehicle (1) and means (115) for thrusting this bolster beneath the pipeline (4).

23. Device in accordance with any one of claims 6 to 19, characterized in that it comprises means (149, 155) for cutting a trench (147) in the sea floor and for laying the pipeline (4) therein.

24. Device in accordance with claim 23, characterized in that it comprises means (163, 161, 165) for transferring the material excavated from the trench (147) and for discharging it onto the pipeline (4) which has been laid.

25. Device in accordance with any one of claims 6 to 24 for constructing and installing a twin pipeline (204a, 204b), characterized in that it comprises an underwater vehicle divided into two twin vehicles (201a, 201b), these two vehicles being connected together by means of a U-shaped pipe (205) having its openings on the front faces of the two vehicles.

## Patentansprüche

1. Verfahren zur Herstellung und Verlegung von Unterwasserleitungen mit oder ohne Hilfe eines Schiffes, die mit wenigstens einem Punkt der Küste verbunden sind, wobei an Ort und Stelle am Grund des Gewässers wenigstens ein Teil der Leitung (4) in einem ein Unterwasserfahrzeug bildenden Gehäuse (1) hergestellt wird, das sich in Richtung der Verlegung bewegt, auf dem Boden ruht und sich auf diesem im Maße der Herstellung der Leitung fortbewegt, und wobei das Innere des Gehäuses (1) ständig mit der Atmosphäre in Verbindung steht, dadurch gekennzeichnet, daß das Gehäuse (1) mittels der bereits verlegten Leitung (4) in Verbindung mit der Atmosphäre gebracht wird.

2. Verfahren nach Anspruch 1, dadurch gekennzeichnet, daß die Leitung (4) aus der auf die Verlegungsrichtung bezogenen Rückseite des Gehäuses (1) durch eine abgedichtete Öffnung (5) dieses Gehäuses austritt.

3. Verfahren nach Anspruch 2, dadurch gekennzeichnet, daß die Leitung (4) in dem Gehäuse (1) aus einem Agglomeratmaterial mit schnell abbindendem Bindemittel hergestellt wird.

4. Verfahren nach Anspruch 2, dadurch gekennzeichnet, daß die Leitung (4) in dem Gehäuse (1) hergestellt wird, indem Platten zusammengesetzt werden, die die Leitung bilden und vom Festland über die bereits verlegte Leitung (4) zugeführt werden.

5. Verfahren nach Anspruch 2, dadurch gekennzeichnet, daß in Inneren des Gehäuses (1) Leitungsabschnitte (64) Ende an Ende einandergefügt werden, die von einem Schiff (52) angeliefert werden.

6. Vorrichtung zum Verlegen von Unterwasserleitungen, die mit wenigstens einem Punkt ker Küste verbunden sind, auf dem Grund mit oder ohne Hilfe eines Schiffes zur Anwendung bei dem Verfahren nach Anspruch 1, mit einem Unterwasserfahrzeug (1), das mit Mitteln (2) zum Fortbewegen auf dem Grund ausgerüstet ist, mit flexiblen Verbindungsmitteln zur Verbindung mit dem gegebenenfalls verwendeten Schiff, mit Mitteln (35, 42; 46) zur Herstellung wenigstens eines Teils der Leitung (4) in dem Fahrzeug und Mitteln zum Herausziehen der Leitung aus dem Fahrzeug in dem Maße ihrer Herstellung und zum Verlegen derselben auf dem Gewässergrund, wobei diese Mittel den Innenraum des Fahrzeugs mit dem gesamten Innenraum der bereits verlegten Leitung verbinden, dadurch gekennzeichnet, daß sie Mittel für den Transport zwischen dem Fahrzeug (1) und dem Ende der Leitung (4) aufweist, das sich am Festland befindet, wobei diese Transportmittel in der bereits verlegten Leitung untergebracht sind.

7. Vorrichtung nach Anspruch 6, dadurch gekennzeichnet, daß sie Mittel (39) zur Vorbereitung eines schnell abbindenden Agglomeratmaterials in dem Fahrzeug und Mittel (42, 44) zur Einspritzung dieses Materials zwischen zwei Zylindern aufweist, welche die Innenwandung bzw. Außenwandung der Leitung (4) begrenzen.

8. Vorrichtung nach Anspruch 6, dadurch gekennzeichnet, daß sie in dem Fahrzeug Handhabungsmittel (46) enthält, um die Leitung bildende Platten (49) in Stellung zu bringen und diese Platten dicht zusammenzufügen.

9. Vorrichtung zur Durchführung des Verfahrens nach Anspruch 5, dadurch gekennzeichnet, daß sie Handhabungsmittel (53, 62) enthält, um einen vorgefertigten Leitungsabschnitt (64) von dem Schiff (52) bis zu dem Fahrzeug (1) abzusenken, und daß das Fahrzeug eine Schleuse (56) zur Einführung des Abschnitts in das Fahrzeug enthält.

10. Vorrichtung zur Durchführung des Verfahrens nach Anspruch 5, dadurch gekennzeichnet, daß sie Handhabungsmittel (72) und Führungsmittel (71) enthält, um einen vorgefertigten Leitungsabschnitt (68a) von dem Schiff (69) bis zu dem Fahrzeug (1a) abzusenken, und ein zweites, in Verlegungsrichtung vor dem ersten Fahrzeug (1a) angeordnetes Fahrzeug (1b) enthält, das mit mechanischen Mitteln (82) versehen ist, um den Abschnitt durch eine mit Dichtungsmitteln (5a) versehene Öffnung hindurch in das erste Fahrzeug zu drücken.

11. Vorrichtung nach einem der Ansprüche 6 bis 10, dadurch gekennzeichnet, daß die Mittel zum Herausziehen der Leitung (4) aus dem Fahrzeug bzw. zum Einführen eines Abschnittes in dieses im Inneren der dichten Öffnung (5) zwei Ringe (12, 14; 92, 99) aus elastischem und widerstandsfähigem Material enthalten, die jeweils ein selektiv aufblähbares Volumen (13; 94, 101) enthalten, um das dichte Zusammenwirken des Ringes mit der Leitung (4) zu gewährleisten, wobei wenigstens einer (12; 99) dieser Ringe auf einem ringförmigen Kolben (11; 98) montiert ist, der in bezug auf das Fahrzeug (1) in Längsrichtung gleitet.

12. Vorrichtung nach einem der Ansprüche 6 bis 11, dadurch gekennzeichnet, daß die Dichtungsmittel (5) zum Herausziehen der Leitung (4) aus dem Fahrzeug (1) Hubvorrichtungen (6, 105) enthalten, die sich einerseits an einem festen Element des Fahrzeugs und andrerseits an einer Manschette (11; 98) abstützen, die mit Mitteln (12; 99) zum Aufspannen auf die Leitung (4) versehen ist, wobei Synchronisationsmittel vorgesehen sind, um den Hubvorrichtungen eine Geschwindigkeit zu verleihen, die gleich der Fortbewegungsgeschwindigkeit des Fahrzeugs auf dem Grund ist.

13. Vorrichtung nach einem der Ansprüche 6 bis 12, dadurch gekennzeichnet, daß die Antriebsmittel des Fahrzeugs einen orientierbaren Raupenantrieb (2) enthalten.

14. Vorrichtung nach Anspruch 13, dadurch gekennzeichnet, daß der Raupenantrieb (2) demontierbar ist und daß das Fahrzeug Schleusen (23) aufweist, um die Antriebe (2) in das Fahrzeug (1) hineinzubringen.

15. Vorrichtung nach einem der Ansprüche 6 bis 14, dadurch gekennzeichnet, daß das Fahrzeug (1) auf seinen Antriebsmitteln mittels Aufhängszylindern (3) befestigt ist.

16. Vorrichtung nach Anspruch 15, dadurch gekennzeichnet daß der Hub der Aufhängungszylinder (3) so bestimmt ist, daß der Raupenantrieb (2) in die Demontageschleuse (23) hochgehoben werden kann.

17. Vorrichtung nach einem der Ansprüche 15 oder 16, dadurch gekennzeichnet, daß sie Mittel (3) aufweist, um den Längsaufbau des Fahrzeugs (1) so einzustellen, daß die dichte Austrittsöffnung (5) der Leitung (4) in einem im wesentlichen konstanten Abstand vom Grund gehalten wird.

18. Vorrichtung nach einem der Ansprüche 13 bis 17, dadurch gekennzeichnet, daß sie waagerechte Hubvorrichtungen (29) enthält, um die Orientierung der Raupenantriebe (2) zu steuern.

19. Vorrichtung nach einem der Ansprüche 6 bis 18, dadurch gekennzeichnet, daß die Abdichtungsmittel der dichten Öffnung (5) zwischen der Leitung (4) und dem Fahrzeug (1) an einem Kugelgelenk gelagert sind.

20. Vorrichtung nach einem der Ansprüche 6 bis 18, dadurch gekennzeichnet, daß sie zwei Schleusen (119) zur Entnahme von zwei Halbmanschetten (121) aus dem Fahrzeug (1) auf jeder Seite der Leitung (4), Mittel (125) zum Unterdrucksetzen dieser Halbmanschetten derart, daß die Leitung eingespannt wird, und Mittel (133, 135, 138) zur Verankerung von die Manschette (121) befestigenden Bolzen (146) im Grund enthält.

21. Vorrichtung nach Anspruch 20, dadurch gekennzeichnet, daß die Mittel zur Durchführung der Verankerung Bohrstäbe (138) enthalten, die mit Antriebseinrichtungen (133) versehen sind, wobei die gesamte Anordnung in verschließbaren Rohren (129) untergebracht ist, die mit dem Innenraum des Fahrzeugs (1) in Verbindung stehen können.

22. Vorrichtung nach einem der Ansprüche 6 bis 20, dadurch gekennzeichnet, daß sie eine Schleuse (109) aufweist, um eine Querstrebe (118) des Fahrzeugs (1) herauszuholen, und Mittel (115), um diese Querstrebe unter die Leitung (4) zu drücken.

23. Vorrichtung nach einem der Ansprüche 6 bis 19, dadurch gekennzeichnet, daß sie Mittel (149, 155) enthält, um einen Graben (147) in dem Unterwassergrund zu bilden und die Leitung (4) darin zu verlegen.

24. Vorrichtung nach Anspruch 23, dadurch gekennzeichnet, daß sie Mittel (163, 161, 165) zur Aufnahme des Abraumes von Ausheben des Grabens (147) und zum Aufwerfen desselben auf die verlegte Leitung (4) enthält.

25. Vorrichtung nach einem der Ansprüche 6 bis 24 zur Verwirklichung und Verlegung einer Doppelleitung (204a, 204b), dadurch gekennzeichnet, daß sie ein Doppel-Unterwasserfahrzeug enthält, das aus zwei Zwillingsfahrzeugen (201a, 201b) gebildet ist, wobei diese beiden Fahrzeuge durch ein U-förmiges Rohrgebilde (205) verbunden sind, das auf den Vorderseiten der beiden Fahrzeuge mündet.

FIG.1

# FIG. 2

FIG_3

# FIG_4

# FIG_5

# FIG_6

FIG.7

## FIG_8

FIG_9

FIG_10

FIG_11

## FIG_12

## FIG_21

## FIG_13

## FIG_14

11

**0 006 812**

FIG_16

FIG_15

FIG_17

12

FIG_19

FIG_20

FIG_18

0 006 812

13